# EUROPEAN PATENT SPECIFICATION

(11) **EP 1 862 504 B1**
(45) Date of publication and mention of the grant of the patent: **18.01.2012**
(21) Application number: 06729114.6
(22) Date of filing: 15.03.2006
(51) Int. Cl.: C08L 45/00, C08K 5/17, H01L 31/04, H01M 14/00, C08L 65/00

(54) **RESIN COMPOSITION FOR SOLAR CELL PACKAGE**
HARZZUSAMMENSETZUNG FÜR SOLARZELLENPAKET
COMPOSITION DE RESINE POUR ENCAPSULATION DE CELLULE SOLAIRE

(30) Priority: 18.03.2005 JP 2005079436
(43) Date of publication of application: 05.12.2007
(73) Proprietor: Mitsui Chemicals, Inc., Tokyo 105-7117 (JP)
(72) Inventor: KANEKO, Kazuyoshi c/o Mitsui Chemicals, Inc.,, Chiba, 2990265 (JP); YAMAOKA, Hiroyasu c/o Mitsui Chemicals, Inc.,, Chiba, 2990265 (JP)
(74) Representative: Benson, John Everett
(86) International application number: PCT/JP2006/305093
(87) International publication number: WO 2006/100974

(56) References cited:
- EP-A- 0 361 909
- EP-A- 1 790 690
- EP-A- 1 790 691
- JP-A- 9 268 250
- JP-A- 10 077 321
- JP-A- 11 026 791
- JP-A- 2003 007 262
- JP-A- 2004 031 445
- US-A1- 2002 062 926
- US-B1- 6 331 591

## Description

### TECHNICAL FIELD

The present invention relates to the use to a resin composition for forming a) a wet solar cell package or b) a transparent substrate for a wet solar cell, which composition is suitable as a molding material of a package for a solar cell, as well as to a wet solar cell comprising such a wet solar cell package or such a transparent substrate.

### BACKGROUND ART

A solar cell directly converts light energy into electrical energy. As the solar cell, a wet solar cell having a high conversion efficiency of energy and a relatively low production cost has been widely used in buildings, road signs, public signs, safety post, car stops, panel lights and the like. The wet solar cell has a package in which a semiconductor electrode, a counter electrode and an electrolytic solution are retained and a transparent substrate which is a light-receiving surface. These two electrodes are immersed in the electrolytic solution.

In the conventional wet solar cell, a transparent substrate made of glass and a conductive substrate are bonded via a spacer to form a gap by these substrates and a spacer. A transparent conducting layer is formed on one surface of the transparent substrate made of glass and a dye-sensitizing semiconductor electrode is formed on one surface of the conductive substrate. The wet solar cell is composed by disposing the transparent substrate made of glass and the conductive substrate so that the transparent conductive layer and the dye-sensitizing semiconductor electrode are faced in the gap. In addition, the electrolytic solution is filled in the gap. In the bonding part of the transparent substrate made of glass or conductive substrate with the spacer, the inside of the gap is sealed by applying a resin from the outer surface. As the sealing resin, there has been used a resin which is difficult to dissolve in a solvent contained in the electrolytic solution.

However, in such the conventional wet solar cell, the electrolytic solution was likely to exude through the gap between the transparent substrate and spacer or the gap between the conductive substrate and spacer. In this case, the electrolytic solution and sealing resin come into contact with each other to gradually dissolve the resin. In other words, the electrolytic solution contains a solvent such as acetonitrile as an electrolytic solution ingredient, thereby dissolving the sealing resin. When such condition continued for a prolonged period of time, it sometimes happened that the sealing resin was dissolved and the electrolytic solution filled leaked out. In this way, in the conventional wet solar cell, it has been difficult to stably seal the electrolytic solution over an extended period of time.

In the Patent Document 1, there is disclosed a flexible wet solar cell using polyester, polycarbonate and polyether sulfone as a transparent thin film and its production method. However, these resins are insufficient in chemical resistance, moisture resistance and transparency. In addition, in the Patent Document 2, there is disclosed a wet solar cell which has an el-ectrolytic solution in the gap formed by bonding a transparent substrate with a conductive substrate having an indented part (so-called dents) slightly lower than the surrounding area and its production method. However, since glass is used for a transparent substrate, the weight of the resulting wet solar cell was heavy and there were points to be improved in miniaturization and processability.

Further, in the Patent Document 3, there is described a package molded from a resin composition containing a cyclic olefin polymer, an ultraviolet absorber and a hindered amine-based light stabilizer, but no descriptions are made for an example in which the package is applied to a package for a solar cell and a transparent substrate for a solar cell.
[Patent Document 1] Japanese Patent Laid-Open Publication No. H11-288745
[Patent Document 2] Japanese Patent Laid-Open Publication No. H11-307141
[Patent Document 3] Japanese Patent Laid-Open Publication No. H07-216152

### DISCLOSURE OF THE INVENTION

The present invention is to solve the problems accompanied by the above-mentioned conventional technology and to provide the use of a resin composition for a wet solar cell package which is excellent in transparency, moisture resistance, weather resistance, and chemical resistance and a transparent substrate for a wet solar cell by molding the resin composition. Also provided is a wet solar cell which comprises such a wet solar cell package or transparent substrate.

As a result of earnest studies for solving the above-mentioned problems, the present inventors found out that according to a resin composition for a solar cell package containing a specific cyclic olefin polymer, there may be prevented the deterioration due to ultraviolet light, the coloring in use and further the decrease in mechanical strength and the like. In addition, since the resin composition is excellent in chemical resistance to the electrolytic solution used in the wet solar cell, the present inventors found out that the electrolytic solution may be stably contained in its package over an extended period of time and thus completed the present invention.
That is, the present invention is use of a resin composition for forming a) a wet solar cell package or b) a transparent substance for a wet solar cell,wherein the resin composition contains a cyclic olefin polymer having one kind or two or more kinds of structures represented by the following general formula (1): 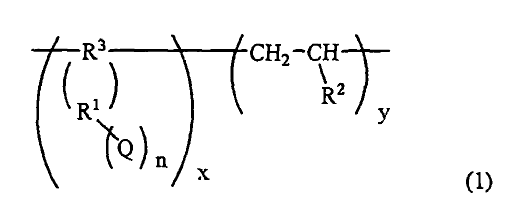 wherein x and y represent a copolymerization ratio and are a real number satisfying 0/100≤y/x≤95/5; x and y are on a molar basis;
n is the number of substitution of a substituent Q and an integer of 0≤n≤2;
R¹ is a 2+n valent group selected from the group consisting of hydrocarbon groups having 2 to 20 carbon atoms and R¹ which is present in plurality may be the same or different;
R² is a hydrogen atom, or a monovalent group selected from the group consisting of hydrocarbon groups having 1 to 10 carbon atoms containing carbon and hydrogen atoms and R² which is present in plurality may be the same or different;
R³ is a tetravalent group selected from the group consisting of hydrocarbon groups having 2 to 10 carbon atoms and R³ which is present in plurality may be the same or different;
Q is COOR⁴ (R⁴ is a hydrogen atom, or a monovalent group selected from the group consisting of hydrocarbon groups having 1 to 10 carbon atoms containing carbon and hydrogen atoms).
In one embodiment of such a use, the resin composition is a material of a package for a wet solar cell.
In another embodiment of such a use, the resin composition is a material of a transparent substrate for a wet solar cell.
The invention also provides a wet solar cell, comprising:
a package with an opening for storing an electrolytic solution;
a transparent substrate disposed to cover at least part of said opening; and
a pair of facing electrodes in a space formed by said package and-said transparent substrate;
wherein:
a) said package is a wet solar cell package for storing an electrolytic solution for the wet solar cell, obtainable by molding a resin composition as defined herein; or
b) said transparent substrate is a transparent substrate for a wet solar cell disposed on the light-receiving surface of the wet solar cell, obtainable by molding a resin composition as defined herein.

A resin composition for a solar cell package is excellent in transparency, moisture resistance, weather resistance and chemical resistance and may be suitably used as a package for a wet solar cell and a transparent substrate for a wet solar cell.

### BRIEF DESCRIPTION OF THE DRAWINGS

The above-mentioned objects and other objects, characteristics and advantages will be clarified by the following preferred embodiments and the following drawing accompanied by the preferred embodiments.

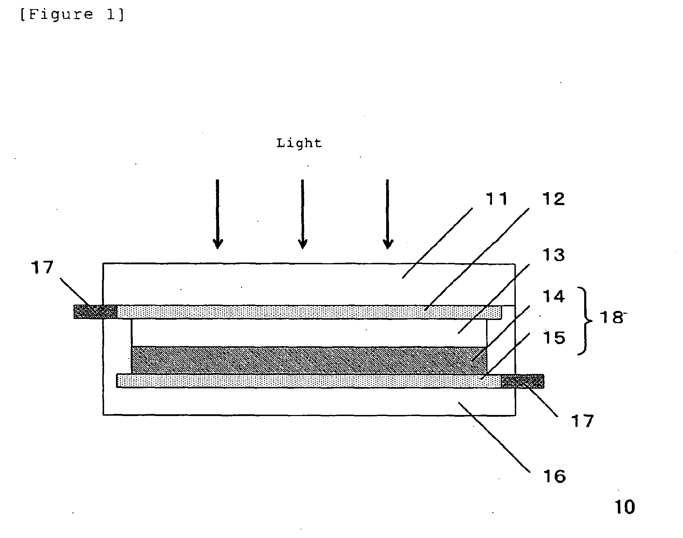

[Figure 1] Figure 1 is a cross-sectional view schematically illustrating a wet solar cell of the present invention.

### BEST MODE FOR CARRYINMG OUT THE INVENTION

Hereinafter, the present invention will be explained in detail.

### [Cyclic Olefin Polymer]

A cyclic olefin polymer used in the present invention is a polymer having one kind or two or more kinds of structures represented by the following general formula (1): 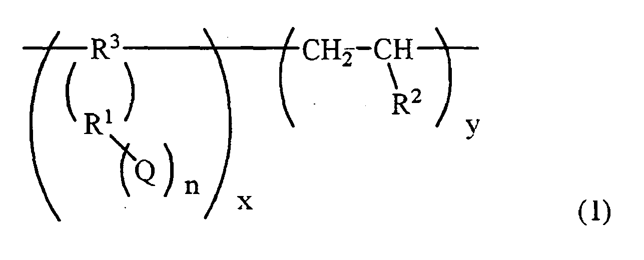 wherein x and y represent a copolymerization ratio and are a real number satisfying 0/100≤y/x≤95/5; x and y are on a molar basis;
n is the number of substitution of a substituent Q and an integer of 0≤n≤2;
R¹ is a 2+n valent group selected from the group consisting of hydrocarbon groups having 2 to 20 carbon atoms and R¹ which is present in plurality may be the same or different;
R² is a hydrogen atom, or a monovalent group selected from the group consisting of hydrocarbon groups having 1 to 10 carbon atoms containing carbon and hydrogen atoms and R² which is present in plurality may be the same or different;
R³ is a tetravalent group selected from the group consisting of hydrocarbon groups having 2 to 10 carbon atoms and R³ which is present in plurality may be the same or different;
Q is COOR⁴ (R⁴ is a hydrogen atom, or a monovalent group selected from the group consisting of hydrocarbon groups having 1 to 10 carbon atoms containing carbon and hydrogen atoms).

For each symbol in the general formula (1), there may be mentioned the following preferred conditions which ma-y be used in combination where necessary.
[1] R¹ is a group having a cyclic structure on at least one site in the structure.
[2] As exemplification of a structure unit containing the R¹ (when n=0), R³ is the exemplified structures (a), (b) and (c); 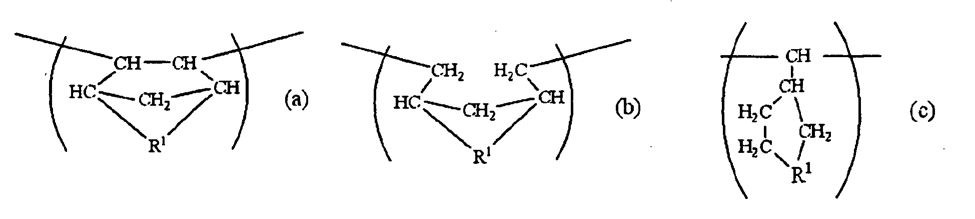 (in the formulas, R¹ is a 2+n valent group selected from the group consisting of hydrocarbon groups having 2 to 20 carbon atoms).
[3] n is 0.
[4] y/x is a real number satisfying 0/100≤y/x≤95/5 on a molar basis, respectively.
[5] R² is a hydrogen atom or -CH₃ and R² which is present in plurality may be the same or different.
[6]Q is a -COOH or -COOCH₃ group.

The cyclic olefin polymer preferably contains one kind or two or more kinds of structures represented by the following general formula (2) and the above-mentioned preferred conditions may be used in combination where necessary. 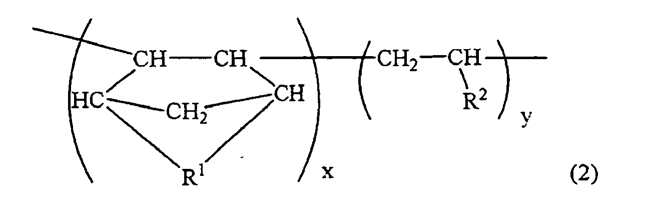 (in the formula, R¹ is a 2+n valent group selected from the group consisting of hydrocarbon groups having 2 to 20 carbon atoms and R¹ which is present in plurality may be the same or different.
R² is a hydrogen atom, or a monovalent group selected from the group consisting of hydrocarbon groups having 1 to 5 carbon atoms and R² which is present in plurality may be the same or different.
x and y represent the copolymerization ratio and are a real number satisfying 5/95≤y/x≤95/5, preferably 10/90≤y/x≤90/10. x and y are on a molar basis.)

For each symbol in the above-mentioned general formula (2), there may be mentioned the following most preferred condition which may be used in combination where necessary.
[1] The R¹ group is a bivalent group represented by the general formula (3); 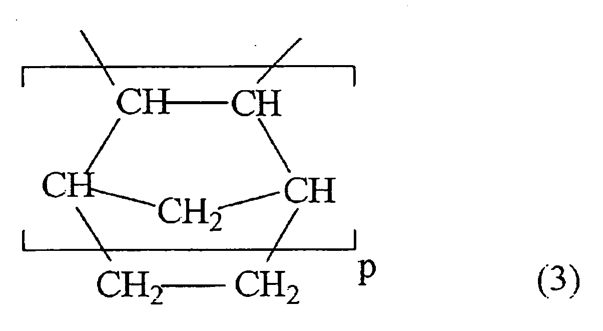 (in the formula, p is an integer from 0 to 2), and further preferably is a bivalent group in which p is 1 in the above-mentioned general formula (3).
[2] R² is a hydrogen atom.
   Among these, as the embodiment in combination these conditions, a cyclic olefin polymer is preferably a polymer obtained by random addition polymerization of ethylene and tetracyclo [ 4.4.0.1^{2,5}.1^{7,10}]-3-dodecene (hereinafter abbreviated as "TD").

Further, in the case where the cyclic olefin polymer is an addition polymer, the content of a structural unit derived from ethylene is preferably 50 to 90 mol%.

In the case where the cyclic olefin polymer is a ring-opening polymer of a cyclic olefin, for each symbol in the above general formula (1), there may be mentioned the following preferred conditions which may be used in combination where necessary.
[1] R¹ is a group having a cyclic structure on at least one site in the structure.
[2] As an exemplification of a structure unit containing the R¹ (when n=0), R³ contains at least the above-exemplified structures (b).
[3] n is 0.
[4] y/x is a real number satisfying preferably 0/100≤y/x≤80/20 and more preferably 0/100≤y/x≤50/50 on a molar basis, respectively.
[5] R² is a hydrogen atom or -CH₃ and R² which is present in plurality may be the same or different.
[6] Q is represented by COOR⁴ (R⁴ is a hydrogen atom, or a monovalent group selected from the group consisting of hydrocarbon groups having 1 to 10 carbon atoms containing carbon and hydrogen atoms) and Q which is present in plurality may be the same or different.

The ring-opening polymer of a cyclic olefin which is a cyclic olefin polymer preferably contains one kind or two or more kinds of structures represented by the following general formula (4) and the above-mentioned preferred conditions may be used in combination where necessary.

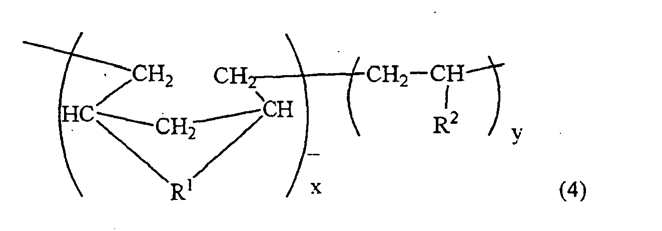

In addition, in the case where the structural units derived from a monomer which are repeated x times are joined to each other, these structural units are joined to each other through a double bond.

For each symbol in the above-mentioned general formula (4), there may be mentioned the following most preferred condition which may be used in combination where necessary.
[1] R¹ group is any of the following examples.
[2] R² group is a hydrogen atom.

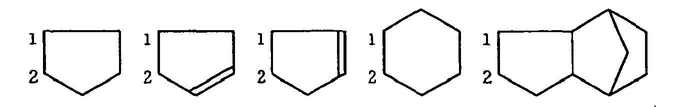

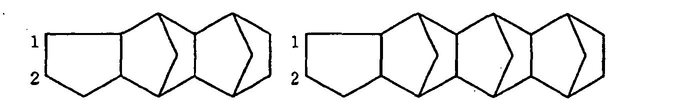

Further, in the above examples, the carbon atom to which the number of 1 or 2 is assigned represents a carbon atom bonding to the carbon atom in the general formula (4). In addition, part of these exemplified structures may have an alkylidene group. Such alkylidene group is usually an alkylidene group having carbon atoms of 2 to 20. As a specific example of such an alkylidene group, there may be mentioned ethylidene group, propylidene group and isopropylidene group.

Among these, as the embodiment in combination of these conditions, a ring-opening polymer of a cyclic olefin is preferably a polymer obtained by ring-opening polymerization of tricyclo[4.3.0.1^{2,5}]deca-3,7-diene(dicyclopentadiene: DCPD).

In the case where a cyclic olefin polymer is a hydrogenated product of a ring-opening polymer of a cyclic olefin, the hydrogenated product may be obtained by saturating by hydrogenation of part or whole of the double bond of the above-mentioned ring-opening polymer, for example, in the presence of a publicly-known hydrogenation catalyst.

### (Type of Polymerization)

Further, the type of polymerization is not limited at all in the present invention and there may be applied various types of publicly-known polymerizations such as addition polymerization and ring-opening polymerization. As the addition polymer, there may be mentioned a random copolymer, a block copolymer, an alternate copolymer and the like. In the present invention, a random copolymer is preferably used from the viewpoint of improvement in weather resistance.

### (Other structures which may be used as part of main chain)

Furthermore, a polymer used in the present invention may have a repeating structural unit derived from other copolymerizable monomer where necessary in the range where the excellent physical properties of a product obtained by a molding method of the present invention are not impaired. The copolymerization ra-tio is not limited, but preferably is 20 mol% or less and further preferably 10 mol% or less. If the copolymerization ratio exceeds the above range, the resulting polymer tends to have insufficient heat resistance. In addition, the type of copolymerization is not limited but a random copolymer is preferable.

### (Molecular weight of polymer)

The molecular weight of a cyclic olefin polymer used in the present invention is not limited but preferably is 0.01 to 150 g/10 min, more preferably 0.1 to 100 g/10 min and most preferably 0.5 to 70 g/10 min when a melt flow rate (MFR; at a temperature of 260°C under a load of 2.16 kg in accordance with ASTM D1238) is measured as an alternate index of molecular weight.

If the MFR is 0.01 g/10 min or more, an excellent moldability may be obtained, and if the MFR is 150 g/10 min or less, it is preferable because mechanical properties such as toughness are not impaired. In other words, if the MFR is within the above range, a balance between moldability and mechanical properties such as toughness is excellent.

### (Glass transition temperature)

The glass transition temperature of a cyclic olefin polymer is preferably 80°C to 190°C, more preferab-ly 105°C to 180°C and especially preferably 105°C to 160°C. The glass transition temperature of a cyclic olefin polymer may be adjusted by accordingly selecting the content of the structural unit derived from ethylene in the case where the cyclic olefin polymer is an addition polymer.
If the polymer has a glass transition temperature of 80°C or higher, an excellent heat resistance may be obtained. In addition, if the glass transition temperature is 190°C or lower, an excellent moldability may be obtained. That is, if the polymer has a glass transition temperature within the above range, it is excellent in balance between heat resistance and moldability.
Especially, if the polymer has a glass transition temperature in the range of 105°C to 180°C, it may be suitably used as a package for a wet solar cell and a transparent substrate for a wet solar cell because it is excellent especially in mechanical properties.

The above-mentioned cyclic olefin polymer may be suitably used as a transparent substrate disposed on the light-receiving surface of a wet solar cell which converts light energy into electrical energy and a package because it has a high transparency.
In addition, a cyclic olefin polymer is excellent in moisture resistance and may prevent the deterioration of the semiconductor electrodes and electrolytic solution in a wet solar cell package due to the moisture absorption.
Further, the cyclic olefin polymer is excellent in chemical resistance to the solvent and the electrolyte composed of an electrolytic solution of a wet solar cell and may be suitably used especially as a material forming a package for a wet solar cell and a transparent substrate for a wet solar cell, in which an electrolytic solution comes into contact with the resin. As the above-mentioned solvent, there may be used a carbonate compounds such as ethylene carbonate, propylene carbonate, diethylcarbonate and methylethyl carbonate, an ether compound such as tetrahydrofuran, dioxane and diethoxyethane, various alcohols, γ-butyllactone, acetonitrile, cyclohexanone and the like. In addition, the electrolyte is typically made of a combination of an iodine molecule (I₂) and an iodide and the like. As the iodide, there may be mentioned a metal iodide such as LiI, NaI, KI and CaI₂, a quaternary ammonium iodide such as tetraalkyl iodide, pyridinium iodide and imidazolium iodide.

### [Process for producing cyclic olefin polymer]

A cyclic olefin polymer may be produced by appropriately selecting the conditions in accordance with a method described in Japanese Patent Laid-Open Publication No. S60-168708, Japanese Patent Laid-Open Publication No. S61-120816, Japanese Patent Laid-Open Publication No. S61-115912, Japanese Patent Laid-Open Publication No. S61-115916, Japanese Patent Laid-Open Publication No. S61-271308, Japanese Patent Laid-Open Publication No. S61-272216, Japanese Patent Laid-Open Publication No. S62-252406, Japanese Patent Laid-Open Publication No. S62-252407, Japanese Patent Laid-Open Publication No. H07-324108, Japanese Patent Laid-Open Publication No. H09-176397 and the like.

Since a resin composition for a solar cell package contains the above-mentioned cyclic olefin polymer, there may be obtained a package for a wet solar cell or a transparent substrate for a wet solar cell which is excellent in transparency, moisture resistance, weather resistance and chemical resistance. In addition, if a weather resistance is required over an extended period of time, there may be added the following ultraviolet absorber and hindered amine-based light stabilizer.

### [Ultraviolet absorber]

The ultraviolet absorber may be used as long as it prevents the deterioration of the resin due to ultraviolet light and prevents the deterioration of the content by blocking ultraviolet light with a package obtained by molding the resin containing the ultraviolet absorber and there may be mentioned a benzotriazole-based compound, triazine-based compound, or benzophenone-based compound.

Specifically, there may be mentioned hydroxybenzophenones such as 2-hydroxy-4-methoxybenzophenone, 2-hydroxy-4-n-octoxybenzophenone, 2-hydroxy-4-methoxybenzophenone, 2,2'-dihydroxy-4-n-octoxybenzophenone, 2,4-dihydroxybenzophenone, 2,2',4,4'-tetrahydroxybenzopheneone and 2,2'-dihydroxy-4,4'-dimethoxybenzophenone; benzotriazoles such as 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-5'-methylphenyl)benzotriazole, 2-(2'-hydroxy-3',5'-di-t-butylphenyl)-5-chlorobenzotriazole, 2-(2'-hydroxy-5'-t-octylphenyl)benzotriazole, 2-(2'-hydroxy-3',5'-di-t-amylphenyl)benzotriazole, 2-(2'-hydroxy-3',5'-di-t-butylphenyl)benzotriazole, 2-[2'-hydroxy-3',5'-bis(α,α-dimethylbenzyl)]benzotria zole, 2-[2'-hydroxy-3'-(3",4",5",6"-tetrahydrophthaloid methyl)-5'-methylphenyl]-benzotriazole and 2,2-methylenebis[4-(1,1,3,3-tetramethylbutyl)-6-(2N-benzotriazole-2-yl)phenol; benzoates such as a condensate of methyl-3-[3-t-butyl-5-(2H-benzotriazole-2-yl)-4-hydroxyphenyl]propionate with polyethylene glycol (molecular weight: approximately 300), phenylsalicylate, p-t-butylphenyl salicylate, 2,4-di-t-butylphenyl-3,5-di-t-butyl-4-hydroxybenzoate and hexadecyl-3,5-di-t-butyl-4-hydroxybenzoate; nickel compounds such as 2,2'-thiobis(4-t-octylphenol)Ni salt, [2,2'-thiobis(4-t-octylphenolate)]-n-butylamine Ni salt, (3,5-di-t-butyl-4-hydroxybenzyl)phosphonic acid monoethyl ester Ni salt, (3,5-di-t-butyl-4-hydroxybenzyl)phosphonic acid monooctyl ester Ni salt and dibutyldithiocarbamate Ni salt;
substituted acrylonitriles such as α-cyano-β-methyl-β-(p-methoxyphenyl)methyl acrylate and α-cyano-β,β-diphenyl methyl acrylate; and oxalic acid dianilides such as N-2-ethylphenyl-N'-2-ethoxy-5-t-phenyl oxalic acid diamide and N-2-ethylphenyl-N'-2-ethoxyphenyl oxalic acid amide.

Among these, preferable is a benzotriazole-based compound and there may be preferably used 2-hydroxy-4-n-octoxybenzophenone, 2-(2'-hydroxy-5'-methylphenyl)benzotriazole and 2-(2'-hydroxy-3'-t-butyl-5'-methylphenyl)-5-chlorobenzotriazole. In addition, they may be used in combination with two or more.

### [Hindered amine-based light stabilizer]

The hindered amine-based light stabilizer used in the present invention includes the following compounds.
Specifically, there may be mentioned bis(2,2',6,6'-tetramethyl-4-pyperidyl)sebacate, succinic acid dimethyl-1-(2-hydroxyethyl)-4-hydroxy-2,2,6,6-tetrame thyl piperidine polycondensate, poly [[6-(1,1,3,3-tetramethylbutyl)imino-1,3,5-triazine-2, 4-diyl]-[(2,2,6,6-tetramethyl-4-piperidyl)imino] hexamethylene [(2,2,6,6-tetramethyl-4-piperidyl)imino], tetrakis(2,2,6,6-tetramethyl-4-pyperidyl)-1,2,3,4-but anetetracarboxylate, 2,2,6,6-tetramethyl-4-pyperidylbenzoate, bis-(1,2,6,6-pentamethyl-4-pyperidyl)-2-(3,5-di-t-but yl-4-hydroxybenzyl)-2-n-butylmalonate, bis(1,2,2,6,6-pentamethyl-4-pyperidyl){[3,5-bis(1,1-d imethylethyl)-4-hydroxyphenyl]methyl}butylmalonate, bis-(N-methyl-2,2,6,6-tetramethyl-9-pyperidyl)sebacat e, 1,1'-(1,2-ethanediyl)bis(3,3,5,5-tetramethyl pyperadinone), (mixed 2,2,6,6-tetramethyl-4-pyperidyl/tridecyl)-1,2,3,9-but ane tetracarboxylate, (mixed 1,2,2,6,6,-pentamethyl-4-pyperidyl/tridecyl)-1,2,3,4-butane tetracarboxylate, mixed{2,2,6,6-tetramethyl-4-pyperidyl/β,β,β'β'-tetra methyl-3,9-[2,4,8,10-tetraoxaspiro(5,5)undecane}dieth yl}-1,2,3,4-butane tetracarboxylate, mixed{1,2,2,6,6-pentamethyl-4-pyperidyl/β,β,β',β'-tet ramethyl-3,9-[2,4,8,10-tetraoxaspiro(5,5)undecane]die thyl}-1,2,3,4-butane tetracarboxylate, N,N'-bis(3-aminopropyl)ethylenediamine-2,4-bis[N-buty 1-N-(1,2,2,6,6-pentamethyl-4-piperidyl)amino]-6-chlor o-1,3,5-triazine condensate, poly[6-N-morpholyl-1,3,5-triazine-2,4-diyl][(2,2,6,6-tetramethyl-4-piperidyl)imino]hexamethylene[(2,2,6,6-tetramethyl-4-piperidyl)imide], a condensate of N,N'-bis(2,2,6,6-tetramethyl-4-piperidyl)hexamethylen e diamine with 1,2-dibromoethane, [N-(2,2,6,6-tetramethyl-4-pyperidyl)-2-methyl-2(2,2,6, and -6-tetramethyl-4-piperidyl)imino]propionamide.

Among these, preferable are bis(2,2',6,6'-tetramethyl-4-pyperidyl)sebacate, succinic acid dimethyl-1-(2-hydroxyethyl)-4-hydroxy-2,2,6,6-tetrame thyl piperidine polycondensate, poly [6-(1,1,3,3-tetramethylbutyl)imino-1,3,5-triazine-2,4 -diyl]-[(2,2,6,6-tetramethyl-4-piperidyl)imino]hexame thylene[(2,2,6,6-tetramethyl-4-piperidyl)imino], tetrakis(2,2,6,6-tetramethyl-4-pyperidyl)-1,2,3,4-but anetetracarboxylate, bis-(1,2,6,6-pentamethyl-4-pyperidyl)-2-(3,5-di-t-but yl-4-hydroxybenzyl)-2-n-butylmalonate, bis(1,2,2,6,6-pentamethyl-4-pyperidyl){[3,5-bis(1,1-d imethylethyl)-4-hydroxyphenyl]methyl}butylmalonate, 1,1'-(1,2-ethanediyl)bis(3,3,5,5-tetramethyl pyperadinone), (mixed 2,2,6,6-tetramethyl-4-pyperidyl/tridecyl)-1,2,3,4-but ane tetracarboxylate, (mixed 1,2,2,6,6,-pentamethyl-4-pyperidyl/tridecyl)-1,2,3,4-butane tetracarboxylate, mixed{2,2,6,6-tetramethyl-4-pyperidyl/β,β,β',β'-tetra methyl-3,9-[2,9,8,10-tetraoxaspiro (5,5) undecane]dieth yl}-1,2,3,4-butane tetracarboxylate, mixed{1,2,2,6,6-pentamethyl-4-pyperidyl/β,β,β',β'-tet ramethyl-3,9-[2,9,8,10-tetraoxaspiro(5,5)undecane]die thyl}-1,2,3,4-butane tetracarboxylate, N,N'-bis(3-aminopropyl)ethylenediamine-2,4-bis[N-buty 1-N-(1,2,2,6,6-pentamethyl-4-piperidyl)aminol-6-chlor o-1,3,5-triazine condensate, poly[6-N-morpholyl-1,3,5-triazine-2,4-diyl][(2,2,6,6-tetramethyl-4-piperidyl)imino]hexamethylene[(2,2,6,6-tetramethyl-4-piperidyl)imino], a condensate of N,N'-bis(2,2,6,6-tetramethyl-4-piperidyl)hexamethylen e diamine with 1,2-dibromoethane, [N-(2,2,6,6-tetramethyl-4-pyperidyl)-2-methyl-2(2,2,6 ,6-tetramethyl-4-piperidyl)imino]propionamide, and preferably used are bis(2,2',6,6'-tetramethyl-4-pyperidyl)sebacate and bis(1,2,2,6,6-pentamethyl-4-pyperidyl){[3,5-bis(1,1-d imethylethyl)-4-hydroxyphenyl]methyl}butylmalonate. In addition, they may be used in combination with two or more.

### [Resin composition for a solar cell package]

A resin composition for a solar cell package is excellent in transparency, moisture resistance, weather resistance ana chemical resistance because it contains the above-mentioned cyclic olefin polymer. For this reason, it may be suitably used for a package for a wet solar cell or a transparent substrate for a wet solar cell among packages for a solar cell.
In one embodiment, the resin composition comprises 0.01 to 5 parts by mass of an ultraviolet absorber and 0.01 to 5 parts by mass of a hindered amine-based light stabilizer, based on 100 parts by mass of the cyclic olefin polymer. In such an embodiment, it is further preferred that the cyclic olefin polymer has a glass transition temperature of 105°C to 180°C and the ultraviolet absorber is a benzotriazole-based compound.
In a resin composition for a solar cell package, in the case where an ultraviolet absorber and hindered amine-based light stabilizer are contained in the cyclic olefin polymer as mentioned above, the ultraviolet absorber is contained preferably in an amount of 0.01 to 2.0 parts by mass and more preferably in an amount of 0.05 to 1.0 parts by mass and the hindered amine-based light stabilizer is contained preferably in an amount of 0.01 to 2.0 parts by mass and more preferably in an amount of 0.05 to 1.0 parts by mass, based on 100 parts by mass of the cyclic olefin polymer. In addition, the ultraviolet absorber and the hindered amine-based light stabilizer may be contained in an appropriate ratio, but the mass ratio of the "ultraviolet absorber" "hindered amine-based light stabilizer" is typically 1: 99 to 99:1, preferably 10: 90 to 90:10 and more preferably 20:80 to 80:20.

Further, it is preferably a benzotriazole-based compound as the hindered amine-based light stabilizer to the resin. The effect of preventing the deterioration of the resin may be obtained more effectively by adding, in combination, for example, 2-hydroxy-4-n-octoxybenzophenone, 2-(2'-hydroxy-5'-methylphenyl)benzotriazole or 2-(2'-hydroxy-3'-t-butyl-5'-methylphenyl)-5-chlorobenzotriazole as the ultraviolet absorber and bis(2,2',6,6'-tetramethyl-4-pyperidyl)sebacate or bis(1,2,2,6,6-pentamethyl-4-pyperidyl){[3,5-bis(1,1-d imethylethyl)-4-hydroxyphenyl]methyl}butylmalonate.

If the glass transition temperature of a cyclic olefin polymer is high (105°C to 180°C), in a package for the wet solar cell molded from a resin composition containing the cyclic olefin polymer and the like, the above effects were obtained and the mechanical properties were excellent, while some deterioration in weather resistance was sometimes observed. The present inventors found out these problems and as a result of earnest studies, they found that a package for a wet solar cell excellent in weather resistance may be obtained by using a cyclic olefin polymer having a high glass transition temperature, a specific ultraviolet absorber and a hindered amine-based light stabilizer in combination.

As the specific ultraviolet absorber, there may be mentioned a benzotriazole-based compound, and for example, 2-(2'-hydroxy-3'-t-butyl-5'-methylphenyl)-5-chloroben zotriazole is preferably used. Meanwhile, as the hindered amine-based light stabilizer, there may be mentioned, for example, bis(1,2,2,6,6-pentamethyl-4-pyperidyl){[3,5-bis(1,1-d imethylethyl)-4-hydroxyphenyl]methyl}butylmalonate. A package for a wet solar cell excellent in weather resistance may be obtained by using a cyclic olefin polymer having a high glass transition temperature and these compounds in combination.

A resin composition for a solar cell package, which contains a cyclic olefin polymer and the above-mentioned ultraviolet absorber and hindered amine-based light stabilizer, is excellent in shielding effect of ultraviolet light and weather resistance, may effectively prevent the strength reduction and the coloration (discoloration) of a molded product even when exposed to sun light for a long period of time and may be suitably used especially for a package for a wet solar cell and a transparent substrate for a wet solar cell.

Further, in the present invention, in addition to an ultraviolet absorber and a hindered amine-based light stabilizer, as other optional ingredients, there may be contained, for example, additives, antioxidants, crosslinking agents, crosslinking auxiliaries, heat stabilizers, antistatic agents, slipping agents, antiblocking agents, antifrost agents, lubricating agents, dyes, pigments, mineral oil-based softeners, petroleum resins, waxes, fillers and the like in a cyclic olefin polymer within the range where the object of the present invention is not impaired.

As such optional ingredients, more specifically, there may be mentioned, for example, a phenol-based antioxidant such as tetrakis[methylene-3-(3,5-di-t-butyl-4-hydroxyphenyl) propionate]methane, β-(3,5-di-t-butyl-4-hydroxyphenyl)propionic acid alkyl ester, 2,2'-oxamidebis[ethyl-3-(3,5-di-t-butyl-4-hydroxyphen yl)propionate]; a fatty acid metal salt such as zinc stearate, calcium stearate and 1,2-hydroxy calcium stearate; and a polyhydric alcohol aliphatic ester such as glycerin monostearate, glycerin distearate, pentaerythritol monostearate, pentaerythritol distearate and pentaerythritol tristearate; and the like.

These may be used in combination with two or more, and for example, there may be used in combination with tetrakis[methylene-3-(3,5-di-t-butyl-4-hydroxyphenyl) propionate]methane and zinc stearate or calcium stearate.

As the inorganic and organic fillers, there may be mentioned silica, diatomaceous earth, alumina, titanium oxide, magnesium oxide, pumice powder, pumice balloon, aluminum hydroxide, magnesium hydroxide, basic magnesium carbonate, dolomite, calcium sulfate, potassium titanate, barium sulfate, potassium sulfite, talc, clay, mica, asbestos, glass flake, glass bead, calcium silicate, montmorillonite, bentonite, graphite, aluminum powder, molybdenum sulfide and the like.

Further, as the optional ingredients, there may be contained a polymer material such as polyamide and polyester in an amount to the extent that the object of the present invention is not impaired.

A resin composition for a solar cell package may be prepared from each ingredient mentioned above by a conventionally-known process for producing a resin composition. Specifically, the resin composition may be prepared, for example, by a method of mechanically blending a cyclic olefin polymer, an ultraviolet absorber and a hindered amine-based light stabilizer and other optional ingredients mentioned above if needed with an extruder, a kneader and a roll, a method of dissolving these ingredients in a suitable good solvent, for example, hexane, heptane, decane, cyclohexane, benzene, toluene, xylene, methylene chloride, chloroform, carbon tetrachloride, and the like, or dissolving and mixing each ingredient separately and then removing the solvent or a method combining these methods.

A molded product with a thickness of 3 mm prepared from such resin composition for a solar cell package has a light transmittance of 70 % or more, preferably of 70 % to 99 % and more preferably of 75 % to 95 % at a wavelength of 400 nm. And it has a light transmittance of 80 % or more, preferably of 80 % to 99 % and more preferably of 85 % to 95 % at a wavelength of 800 nm. Meanwhile, it is preferable that it has a light transmittance of 75 % to 95 % at any of the wavelength of 400 nm to 800 nm. If light transmittance in the range of the above wavelength is within the above range, a wet solar cell excellent in power generation efficiency may be obtained because a package for a wet solar cell and a transparent substrate for a wet solar cell obtained from a resin composition for a solar cell package are excellent in light transmittance in the range of visible light.

In addition, a test piece (in accordance with ASTM D790) prepared by a resin composition for a solar cell package has a retention rate preferably of 50 % to 100 %, more preferably of 60 % to 100 % and especially preferably of 85 % to 99 % before and after the weathering test of the flexural strength of the test piece measured in accordance with ASTM D790, when the weathering test is performed under the condition of a black panel temperature of 63°C, a bath temperature of 42 to 48°C, and cycle condition of a light irradiation period of 120 minutes and a water shower of 18 minutes for 2000 hours. Incidentally, the retention rate of flexural strength is calculated from the equation: (the flexural strength after weathering test / the flexural strength before weathering test) × 100.
If the retention rate of flexural strength is within the above range, the strength reduction of a molded product obtained from a resin composition for a solar cell package may be effectively prevented even when a package for a wet solar cell and a transparent substrate for a wet solar cell are exposed to sunlight and the like, and a wet solar cell excellent in weather resistance may be obtained.

### [Wet solar cell]

A wet solar cell of the present invention is shown in FIG.1.
The wet solar cell 10 has the package for the wet solar cell 16 which having an opening and is stored the electrolytic solution 13, the transparent substrate for the wet solar cell 11 disposed to cover at least part of the opening and a pair of facing electrodes (the transparent electrode layer 12 and the semiconductor electrode 18) in a space formed by the package for the wet solar cell 16 and the transparent substrate for the wet solar cell 11.

The transparent substrate for the wet solar cell 11 may be obtained by molding a resin composition for a solar cell package of the present invention and is excellent in weather resistance, vapor permeability and gas barrier properties. The transparent substrate for the wet solar cell 11 is a substrate disposed on a light-receiving surface of a wet solar cell and composes a solar cell by forming a transparent conductive layer on at least one surface and the like. A transparent substrate composing a solar cell is required to be transparent in order to efficiently convert light energy into electric energy and to have a light transmittance in a specific wavelength range. Meanwhile, it is required that the transparent substrate does not deteriorate due to ultraviolet light over an extended period and may maintain the transparency. In addition, if the transparent substrate is brought into contact with the electrolytic solution used in the wet solar cell, it is required to be excellent in chemical resistance to the electrolytic solution, and conventionally glass has been typically used.

A substrate obtained from a resin composition for a solar cell package of the present invention satisfies the above conditions and may be suitably used as a transparent substrate for a wet solar cell. Further, an extremely lightweight transparent substrate may be obtained compared to glass.

The transparent substrate for the wet solar cell 11 may be molded using a resin composition for a solar cell package by a conventionally-known method and the molding method includes, for example, a press and heat molding method, an extrusion molding method, an inflation molding method and the like. Incidentally, the thickness of the transparent substrate for the wet solar cell 11 is not particularly limited.

The electrode layer (transparent electrode) 12 is preferably excellent in conductivity and light transmittance (light transmittance at the wavelength in the range of ultraviolet to visible light). For example, a thin layer made of SnO₂, ITO, ZnO and the like may be used. As the method of forming a thin layer, there may be used evaporation method, PVD method, application method and the like, but formation by a sputtering method especially contributes to the productivity.

As the electrolyte solution (electrolytic solution) 13, there may be used iodine electrolyte solution, gel electrolyte, solid electrolyte and the like. The gel electrolyte is roughly classified into a physical gel and a chemical gel. The physical gel is gelled by physical interaction at around room temperature and includes, for example, polyacrylonitrile and polymethacrylate. The chemical gel forms a gel with a chemical bond by a crosslinking reaction and includes acrylic acid ester based and methacrylic acid ester based. The solid electrolyte solution includes polypyrol and Cul. When the gel electrolyte and solid electrolyte are used, they may be gelled or solidified by immersing the precursor with a low viscosity in an oxide semiconductor layer and causing a two dimensional or three dimensional crosslinking reaction by a technique such as heating, ultraviolet irradiation and electron irradiation. When the iodine electrolyte solution is used, a redox reaction may be immediately carried out to increase the light-electricity conversion efficiency. In addition, when the gel electrolyte and solid electrolyte are used, no liquid leakage occurs, enabling to increase safety and durability.

The semiconductor electrode 18 has the oxide semiconductor layer 14 and the backside electrode layer 15. The oxide semiconductor layer 14 is made by sintering mixed particles in which particles with a high light diffusing property are mixed in oxide particles with a particle diameter of 0.1 to 10 µm. Since the oxide semiconductor layer formed by the oxide particles and particles with a high light diffusing property forms a highly porous layer, the real internal surface area becomes large and a dye sensitizer is supported also on the internal surface, the incident light is diffused by particles with a high light diffusing property to increase the use efficiency of light. The power generation layer is formed by the dye sensitizer supported on the oxide semiconductor layer and the electrolyte solution immersed in the oxide semiconductor layer.

The backside electrode layer 15 is formed, for example, by applying and drying a platinum paste or carbon paste in a pattern state. The oxide semiconductor layer 14 is formed on the backside electrode layer 15.

The package for a wet solar cell 16 of the present invention is a package storing the semiconductor electrode and the electrolytic solution 13 composing the wet solar cell 10. For this reason, it is required that the package is excellent in chemical resistance to the electrolytic solution containing organic solvent and may stably seal the content for a prolonged period of time without leakage of the electrolyte. In addition, the wet solar cell 10 absorbs light of a specific wavelength to generate electromotive force. In response to this, the wet solar cell 10 preferably has an excellent light transmittance to light of a specific wavelength. Further, since the wet solar cell 10 is installed outdoors such as houses, buildings, road signs, public signs, sight line guidance signs, car stops and panel lights, it is required that the package is not deteriorated due to ultraviolet light and the deterioration of the content may be prevented by blocking ultraviolet light.

A resin composition for a solar cell package is unlikely to deteriorate due to ultraviolet light and a package obtained by molding the resin composition exhibits an excellent light transmittance to light of a specific wavelength and is excellent in an ultraviolet shielding property. For this reason, when the resin composition is used for a package for the solar cell, the package is excellent in power generation efficiency, may prevent the degradation and deterioration of the content and may be suitably used as a package for a wet solar cell. In addition, the package is excellent in weather resistance, vapor permeability and gas barrier properties and also has an excellent chemical resistance (electrolyte solution resistance) to the electrolyte solution.

The package for a wet solar cell 16 of the present invention may be molded by adapting the resin composition for a solar cell package to the shape of the target package by a conventionally-known method, and for example, there may be mentioned a press and heat molding method, an extrusion molding method, an inflation molding method, a direct blowing method, an injection blow process, an injection molding process, a method of molding to a predetermined shape after injection molding to tubes shape and a method of vacuum or pneumatic molding to a predetermined shape after sheet forming.

The electrode connecting part 17 is a conductive connecting part and connects the package 16 in tandem, allowing the package (cell) to line up at a predetermined interval. In addition, a nonconductive partition is installed on the part between the packages, which is not shown in the drawing.
The wet solar cell 10 may be manufactured according to a conventional method.

### (Examples)

In the present invention, each physical property was measured by the following methods.

### (1) Melt Flow Rate (MFR)

The measurement was made under a load of 2.16 kg at 260°C or under a load of 2.16 kg at 280°C in accordance with ASTM D1238.

### (2) Glass Transition Temperature (Tg)

The measurement was made at a heating rate of 10°C /min using DSC-20 manufactured by SEIKO Instruments Inc.

### (3) Weather Resistance

The weathering test was performed by setting a test piece measuring 130 mm × 60 mm × 2 mm thick obtained by injection molding and a flexural test piece (ASTM D790) in the Sunshine Weatherometer (Type: WEL-SUN-DCH-BEN, manufactured by Suga Test Instruments Co., Ltd., Light Source: Sunshine Carbon Arc) under the condition of a black panel temperature of 63°C, a bath temperature of 42°C to 48°C, and cycle condition of a light exposure period of 120 minutes and a water shower of 18 minutes. The evaluation was made for the color change (ΔE) of the test piece and the flexural strength of the flexural test piece before and after the weathering test. The color change was measured in accordance with JIS Z8730 1968 and the flexural strength in accordance with ASTM D790.
Incidentally, the retention rate of flexural strength was calculated from the equation: (the flexural strength after weathering test / the flexural strength before weathering test) × 100.

### (4) Water Absorption Rate

A test piece measuring 65 mm × 60 mm × 2 mm thick obtained by injection molding was prepared and the water absorption rate was measured under the condition of a temperature of 23°C for 24 hours in accordance with JIS K7204.

### (5) Light Transmittance

An injection-molded rectangular plate measuring 65 mm long × 35 mm wide × 3 mm thick was prepared and the light transmittance was measured in the wavelength of 400 nm to 800 nm using an ultraviolet-visible spectrophotometer, U-4100 (manufactured by Hitachi, Ltd.), showing the light transmittances at 400 nm, 500 nm, 600 nm, 700 nm and 800 nm, which are representative measuring wavelengths. In this case, it was observed that the longer the wavelength in the range of 400 to 800 nm, the higher the light transmittance.

### (6) Chemical Resistance

A test piece measuring 65 mm × 60 mm × 2 mm thick obtained by injection molding was immersed in chemicals to be tested at 23°C for 168 hours and was then checked with eyes the presence or absence of the change in shape of the test piece such as dissolution and swelling. When it is judged that there is no problem in use with no change in the shape after immersing, the case was evaluated as "good", and when the shape change such as dissolution and swelling was observed, the case was evaluated as "poor". As the chemicals to be tested, (i) acetonitrile, (ii) propylene carbonate and (iii) isopropanol were used.

### [Example 1]

100 parts by mass of an ethylene-tetracyclododecene copolymer having a glass transition temperature of 125°C and a MFR of 15 g/10 min was melted and mixed by using a twin-screw extruder (PCM-45, manufactured by Ikegai Tekko Co., Ltd.) under the conditions of a cylinder temperature of 230°C, a dice temperature of 230°C and a revolution number of 100 rpm and then the resulting mixture was pelletized by a pelletizer. By using the resulting pellets, test pieces for the evaluation of color change, water absorption rate and chemical resistance of the weathering test and a flexural test piece for the evaluation of the flexural strength of the weathering test were prepared to evaluate each physical property. The results are shown in Table 1.

### [Example 2]

Test pieces were prepared in the same manner as in Example 1 except for using 100 parts by mass of an ethylene-tetracyclododecene copolymer having a glass transition temperature of 125°C and a MFR of 15 g/10 min and 0.2 parts by mass of an ultraviolet absorber (TINUVIN 326: manufactured by Chiba Specialty Chemicals Inc.) and each physical property was evaluated. The results are shown in Table 1.

### [Example 3]

Test pieces were prepared in the same manner as in Example 1 except for using 100 parts by mass of an ethylene-tetracyclododecene copolymer having a glass transition temperature of 125°C and a MFR of 15 g/10 min, 0.1 parts by mass of an ultraviolet absorber (TINUVIN 326: manufactured by Chiba Specialty Chemicals Inc.) and 0.1 parts by mass of a hindered amine-based light stabilizer (Sanol LS-770: manufactured by Sankyo Co., Ltd.), and each physical property was evaluated. The results are shown in Table 1.

### [Example 4]

Test pieces were prepared in the same way as in Example 1 except for melting and mixing 100 parts by mass of an ethylene-tetracyclododecene copolymer having a glass transition temperature of 80°C and a MFR of 30 g/10 min, 0.1 parts by mass of an ultraviolet absorber (UVINUL MS-40: manufactured by BASF Corp.) and 0.1 parts by mass of a hindered amine-based light stabilizer (Sanol LS-770: manufactured by Sankyo Co., Ltd.), under the conditions of a cylinder temperature of 210°C, a dice temperature of 210°C and a revolution number of 100 rpm, and each physical property was evaluated. The results are shown in Table 1.

### [Example 5]

Test pieces were prepared in the same way as in Example 1 except for using only 100 parts by mass of an ethylene-tetracyclododecene copolymer having a glass transition temperature of 105°C and a MFR of 22 g/10 min and each physical property was evaluated. The results are shown in Table 2.

### [Example 6]

Test pieces were prepared in the same way as in Example 1 except for using 100 parts by mass of an ethylene-tetracyclododecene copolymer having a glass transition temperature of 145°C and a MFR of 7 g/10 min and the ethylene content of 60 mol%, and 0.3 parts by mass of an ultraviolet absorber (TINUVIN 326: manufactured by Chiba Specialty Chemicals Inc.) and each physical property was evaluated. The results are shown in Table 2.

### [Example 7]

Test pieces were prepared in the same way as in Example 1 except for using 100 parts by mass of an ethylene-tetracyclododecene copolymer having a glass transition temperature of 145°C and a MFR of 7 g/10 min and the ethylene content of 60 mol%, and 0.3 parts by mass of a hindered amine-based light stabilizer (TINUVIN 144: manufactured by Chiba Specialty Chemicals Inc.) and each physical property was evaluated. The results are shown in Table 2.

### [Example 8]

Test pieces were prepared in the same way as in Example 1 except for using 100 parts by mass of an ethylene-tetracyclododecene copolymer having a glass transition temperature of 145°C and a MFR of 7 g/10 min and the ethylene content of 60 mol%, 0.3 parts by mass of an ultraviolet absorber (TINUVIN 326: manufactured by Chiba Specialty Chemicals Inc.) and 0.3 parts by mass of a hindered amine-based light stabilizer (TINUVIN 144: manufactured by Chiba Specialty Chemicals Inc.) and each physical property was evaluated. The results are shown in Table 2.

### [Example 9]

Test pieces were prepared in the same way as in Example 1 except for using 100 parts by mass of a hydrogenated product of a ring-opening polymer of a dicyclopentadiene (Zenor 1020R (product name, manufactured by ZEON Corporation)) having a glass transition temperature of 105°C and a MFR of 20 g/10 min (280°C, 2.16 kg) and each physical property was evaluated. The results are shown in Table 3.

### [Example 10].

Test pieces were prepared in the same way as in Example 1 except for using 100 parts by mass of a hydrogenated product of a ring-opening polymer of a dicyclopentadiene (Zenor 1020R (product name, manufactured by ZEON Corporation)) having a glass transition temperature of 105°C and a MFR of 20 g/10 min (280°C, 2.16 kg), 0.1 parts by mass of an ultraviolet absorber (TINUVIN 326: manufactured by Chiba Specialty Chemicals Inc.) and 0.1 parts by mass of a hindered amine-based light stabilizer (Sanol LS-770: manufactured by Sankyo Co., Ltd.), and each physical property was evaluated. The results are shown in Table 3.

### [Comparative Example 1]

Test pieces were prepared in the same way as in Example 1 except for using only 100 parts by mass of a polycarbonate resin (Panlite: manufactured by Teijin Chemicals Ltd.) and each physical property was evaluated. In the chemical resistance test, significant shape change was observed for acetonitrile and propylene carbonate and the water absorption rate was a high value of 0.2 %. The results are shown in Table 3.

### [Comparative Example 2]

Test pieces were prepared in the same way as in Example 1 except for using only 100 parts by mass of a polyethylene naphthalate (PEN) resin (Teonex: manufactured by Teijin Chemicals Ltd.) and each physical property was evaluated. The water absorption rate was a high value of 0.15 % and the flexural strength retention (after 1000 hours) was a low value of 77 %. Further, the light transmittance in the wavelength of 400 nm was a low value of 35 %. The results are shown in Table 3.

### [Comparative Example 3]

Test pieces were prepared in the same way as in Example 1 except for using only 100 parts by mass of a polyether sulfone (PES) resin (PES: manufactured by Mitsui Chemicals, Inc.) and each physical property was evaluated. In the chemical resistance test, significant shape change was observed for acetonitrile and propylene carbonate and no transmission of light was measured in any of wavelength range. In addition, the water absorption rate was also an extremely high value of 0.7 % and the flexural strength retention (after 1000 hours) was a low value of 67 %. The results are shown in Table 3.

**Table 1**

| | | Unit | Example 1 | Example 2 | Example 3 | Example 4 |
|---|---|---|---|---|---|---|
| Cyclic Olefin Copolymer | Type | - | Ethylene-tetracyclododecene copolymer | Ethylene-tetracyclododecene copolymer | Ethylene-tetracyclododecene copolymer | Ethylene-tetracyclododecene copolymer |
| | Glass Transition Temperature | °C | 125 | 125 | 125 | 80 |
| | MFR | g/10 min | 15 | 15 | 15 | 30 |
| | Addition Amount | Parts by Mass | 100 | 100 | 100 | 100 |
| Ultraviolet Absorber | Type | - | - | *1 | *1 | *2 |
| | Addition Amount | Parts by Mass | - | 0.2 | 0.1 | 0.1 |
| Hindered Amine-based Light Stabilizer | Type | - | - | - | *3 | *3 |
| | Addition Amount | Parts by Mass | - | - | 0.1 | 0.1 |
| Weather Resistance (ΔE) | After 500 hours | - | 2.5 | 2.1 | 1.7 | 2.1 |
| | After 1000 hours | - | 3.0 | 2.5 | 1.7 | 2.3 |
| | After 2000 | - | 14.0 | 4.5 | 2.0 | 2.5 |
| Weather Resistance (Flexural Strength (Retention)) | 0 hour | MPa(%) | 110(100) | 110(100) | 110(100) | 100(100) |
| | After 500 hours | MPa(%) | 110(100) | 110(100) | 110(100) | 100(100) |
| | After 1000 hours | MPa(%) | 110(100) | 110(100) | 110(100) | 100(100) |
| | After 2000 hours | MPa(%) | 65(59) | 75(68) | 105(95) | 95(95) |
| Water Absorption Rate | 23°C. 24 hours | % | 0.01 | 0.01 | 0.01 | 0.01 |
| Light Transmittance | 400 nm | % | 81 | 80 | 80 | 80 |
| | 500 nm | % | 89 | 87 | 87 | 87 |
| | 600 nm | % | 90 | 90 | 90 | 90 |
| | 700 nm | % | 90 | 90 | 90 | 90 |
| | 800 nm | % | 91 | 90 | 90 | 90 |
| Chemical Resistance | Acetonitrile | - | good | good | good | good |
| | Propylene Carbonate | - | good | good | good | good |
| | Isopropanol | - | good | good | good | good |

| | | | | | | |
|---|---|---|---|---|---|---|
| *1: 2-(2'-hydroxy-3'-t-butyl-5'-methylphenyl)-5-chlorobenzotriazole (TINUVIN 326) *2: 2-hydroxy-4-n-octoxybenzophenone (UVINUL MS-40) *3: bis-(2,2',6,6'-tetramethyl-4-piperidine)sebacate (Sanol LS-770) | | | | | | |

**Table 2**

| | | Unit | Example 5 | Example 6 | Example 7 | Example 8 |
|---|---|---|---|---|---|---|
| Cyclic Olefin Copolymer | Type | - | Ethylene-tetracyclododecene copolymer | Ethylene-tetracyclododecene copolymer | Ethylene-tetracyclododecene copolymer | Ethylene-tetracyclododecene copolymer |
| | Glass Transition Temperature | °C | 105 | 145 | 145 | 145 |
| | MFR | g/10 min | 22 | 7 | 7 | 7 |
| | Addition Amount | Parts by Mass | 100 | 100 | 100 | 100 |
| Ultraviolet Absorber | Type | - | - | *1 | - | *1 |
| | Addition Amount | Parts by Mass | - | 0.3 | - | 0.3 |
| Hindered Amine-based Light Stabilizer | Type | - | - | - | *4 | *4 |
| | Addition Amount | Parts by Mass | - | - | 0.3 | 0.3 |
| Weather Resistance (ΔE) | After 500 hours | - | 3.3 | 2.2 | 2.5 | 2.1 |
| | After 1000 hours | - | 5.6 | 4.5 | 5.6 | 3.8 |
| | After 2000 hours | - | 10.9 | 24.5 | 30.6 | 20.9 |
| Weather Resistance (Flexural Strength (Retention)) | 0 hour | MPa(%) | 110(100) | 110(100) | 110(100) | 110(100) |
| | After 500 hours | MPa(%) | 110(100) | 110(100) | 110(100) | 110(100) |
| | After 1000 hours | MPa(%) | 110(100) | 110(100) | 110(100) | 110(100) |
| | After 2000 hours | MPa(%) | 65(59) | 90(82) | 80(73) | 95(86) |
| Water Absorption Rate | 23°C, 24 hours | % | 0.01 | 0.01 | 0.01 | 0.01 |
| Light Transmittance | 400 nm | % | 80 | 80 | 80 | 79 |
| | 500 nm | % | 87 | 88 | 87 | 86 |
| | 600 nm | % | 90 | 89 | 90 | 89 |
| | 700 nm | % | 90 | 89 | 90 | 89 |
| | 800 nm | % | 90 | 90 | 90 | 90 |
| Chemical Resistance | Acetonitrile | - | good | good | good | good |
| | Propylene Carbonate | - | good | good | good | good |
| | Isopropanol | - | good | good | good | good |

| | | | | | | |
|---|---|---|---|---|---|---|
| *1: 2-(2'-hydroxy-3'-t-butyl-5'-methylphenyl)-5-chlorobenzotriazole (TINUVIN 326) *4: bis(1,2,2,6,6-pentamethyl-4-piperidyl){[3,5-bis(1,1-dimethylethyl)-4-hyroxyphenyl] methyl}butylmalonate (TINUVIN 144) | | | | | | |

**Table 3**

| | | Unit | Example 9 | Example 10 | Comparative Example 1 | Comparative Example 2 | Comparative Example 3 |
|---|---|---|---|---|---|---|---|
| Cyclic Olefin Copolymer | Type | - | Hydrogenated Product of Ring-openeing Polymer of dicyclopentadiene | Hydrogenated Product of Ring-openeing Polymer of dicyclopentadiene | Polycarbonate | Polyethylen Naphthalate | Polyether Sulfone |
| | Glass Transition Temperature | °C | 105 | 105 | - | - | - |
| | MFR | g/10 min | 20(280°C) | 20(280°C) | - | - | - |
| | Addition Amount | Parts by Mass | 100 | 100 | 100 | 100 | 100 |
| Ultraviolet Absorber | Type | - | - | - | *1 - | - | - |
| | Addition Amount | Parts by Mass | - | 0,1 | - | - | - |
| Hindered Amine-based Light Stabilizer | Type | - | - | *3 | - | - | - |
| | Addition Amount | Parts by Mass | - | 0.1 | - | - | - |
| Weather Resistance (ΔE) | After 500 hours | - | 63.6 | 14.1 | 1.5 | 2.0 | 3.0 |
| | After 1000 hours | - | 76.0 | 35.7 | 1.7 | 4.5 | 6.5 |
| | After 2000 hours | - | 80.5 | 70.0 | 2.0 | 13.5 | 16.5 |
| Weather Resistance (Flexural Strength (Retention)) | 0 hour | MPa(%) | 90(100) | 90(100) | 95(100) | 130(100) | 135(100) |
| | After 500 hours | MPa(%) | 90(100) | 90(100) | 95(100) | 125(96) | 120(89) |
| | After 1000 hours | MPa(%) | 90(100) | 90(100) | 95(100) | 100(77) | 90(67) |
| | After 2000 hours | MPa(%) | 85(94) | 90(100) | 90(95) | 70(54) | 65(48) |
| Water Absorption Rate | 23°C, 24 hours | % | 0.01 | 0.01 | 0.20 | 0.15 | 0.70 |
| Light Transmittance | 400 nm | % | 90 | 85 | 85 | 35 | - |
| | 500 nm | % | 91 | 87 | 88 | 82 | - |
| | 600 nm | % | 92 | 90 | 88 | 89 | - |
| | 700 nm | % | 92 | 90 | 90 | 89 | - |
| | 800 nm | % | 92 | 90 | 90 | 89 | - |
| Chemical Resistance | Acetonitrile | - | good | good | poor | good | poor |
| | Propylene Carbonate | - | good | good | poor | good | poor |
| | Isopropanol | - | good | good | good | good | good |

| | | | | | | | |
|---|---|---|---|---|---|---|---|
| *1: 2-(2'-hydroxy-3'-t-butyl-5'-methylphenyl)-5-chlorobenzotriazole (TINUVIN 326) *3: bis-(2,2',6,6'-tetramethyl-4-piperidine)sebacate (Sanol LS-770) | | | | | | | |

When Examples 1, 5 and 9 using only a cyclic olefin polymer are compared with Comparative Examples using the other resin, as is clear from Table 1, it was confirmed that Examples 1, 5 and 9 are excellent in any of weather resistance (flexural strength), water absorption rate, light transmittance and chemical resistance. In addition, it was confirmed that an ethylene-tetracyclododecene copolymer (Example 1) has little color change and is excellent in weather resistance compared to a hydrogenated product of a ring-opening polymer of dicyclopentadiene (Example 9).

Further, when Examples 3 and 4 are compared with Examples 1 and 2, Examples 3 and 4 containing an ultraviolet absorber and a hindered amine-based light stabilizer were confirmed to be excellent in weather resistance for a long period of time because no color change was observed and the retention rate of flexural strength was also not reduced even after 2000 hours of the weathering test.

Furthermore, a molded product, which conprises a resin composition having only an ethylene-tetracyclododecene copolymer with a glass transition temperature of 145°C, a MFR of 7 g/10 min and an ethylene content of 60 mol%, was excellent in mechanical properties, but tended to be somewhat inferior in weather resistance compared to Example 1. In Examples 6 to 8, especially when used in combination with a specific ultraviolet absorber and a hindered amine-based light stabilizer, the molded product is excellent in weather resistance and may be suitably used especially as a package for a wet solar cell and a transparent substrate for a wet solar cell.

## Claims

1. Use of a resin composition for forming a) a wet solar cell package or b) a transparent substrate for a wet solar cell, wherein the resin composition contains a cyclic olefin polymer having one kind or two or more kinds of structures represented by the following general formula (1): 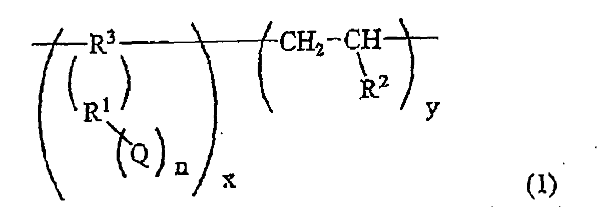 wherein x and y represent a copolymerization ratio and are a real number satisfying 0/100≤y/x≤95/5; x and y are on a molar basis;
n is the number of substitution of a substituent Q and an integer of 0≤n≤2;
R¹ is a 2+n valent group selected from the group consisting of hydrocarbon groups having 2 to 20 carbon atoms and R¹ which is present in plurality may be the same or different;
R² is a hydrogen atom, or a monovalent group selected from the group consisting of hydrocarbon groups having 1 to 10 carbon atoms containing carbon and hydrogen atoms and R². which is present in plurality may be the same or different;
R³ is a tetravalent group selected from the group consisting of hydrocarbon groups having 2 to 10 carbon atoms and R³ which is present in plurality may be the same or different;
Q is COOR⁴ (R⁴ is a hydrogen atom, a monovalent group selected from the group consisting of hydrocarbon groups having 1 to 10 carbon atoms containing carbon and hydrogen atoms).

2. Use of a resin composition according to claim 1, comprising 0.01 to 5 parts by mass of an ultraviolet absorber and 0.01 to 5 parts by mass of a hindered amine-based light stabilizer, based on 100 parts by mass of the cyclic olefin polymer.

3. Use of a resin composition according to claim 1 or 2,wherein the cyclic olefin polymer has one kind or two or more kinds of structures represented by the following general formula (2): 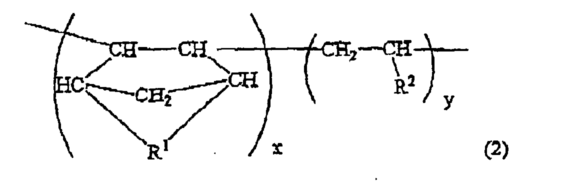 wherein R¹ is a 2+n valent group selected from the group consisting of hydrocarbon groups having 2 to 20 carbon atoms and R¹ which is present in plurality may be the same or different;
R² is a hydrogen atom, or a monovalent group selected from the group consisting of hydrocarbon groups having 1 to 5 carbon atoms and R² which is present in plurality may be the same or different;
x and y represent the copolymerization ratio and are a real number satisfying 5/95≤y/x≤95/5; x and y are on a molar basis.

4. Use of a resin composition according to any one of claims 1 to 3, wherein the cyclic olefin polymer is a copolymer of tetracyclo[4.4.0.1^{2.5}.1^{7,10}]-3-dodecene and ethylene.

5. Use of a resin composition according to any of claims 1 to 4, wherein the cyclic olefin polymer has a glass transition temperature of 105°C to 180°C.

6. Use of a resin composition according to any of claims 1 to 5, wherein the resin composition comprises 0.01 to 5 parts by mass of the ultraviolet absorber and 0.01 to 5 parts by mass of the hindered amine-based light stabilizer based on 100 parts by mass of a cyclic olefin polymer having the glass transition temperature of 105°C to 180°C,wherein said ultraviolet absorber is a benzotriazole-based compound.

7. Use of a resin composition according to any of claims 1 to 6, wherein when a molded product having a thickness of 3 mm is prepared using the resin composition, the molded product has a light transmittance of 70 % or more at a wavelength of 400 nm, and 80 % or more at a wavelength of 800 nm.

8. Use according to any of claims 1 to 7 wherein the resin composition is a material of a package for a wet solar cell.

9. Use according to any of claims 1 to 7 wherein the resin composition is a material of a transparent substrate for a wet solar cell.

10. A wet solar cell, comprising:
a package with an opening for storing an electrolytic solution;
a transparent substrate disposed to cover at least part of said opening; and
a pair of facing electrodes in a space formed by said package and said transparent substrate;
wherein:
a) said package is a wet solar cell package for storing an electrolytic solution for the wet solar cell, obtainable by molding a resin composition as defined in any of claims 1 to 7; or
b) said transparent substrate is a transparent substrate for a wet solar cell disposed on the light-receiving surface of the wet solar cell, obtainable by molding a resin composition as defined in any of claims 1 to 7.

## Patentansprüche

1. Verwendung einer Harzzusammensetzung zum Bilden a) eines Nass-Solarzellenpakets oder b) eines transparenten Substrats für eine Nass-Solarzelle, wobei die Harzzusammensetzung ein zyklisches Olefinpolymer mit einer Art oder zwei oder mehr Arten von Strukturen dargestellt durch die folgende allgemeine Formel (1):enthält, 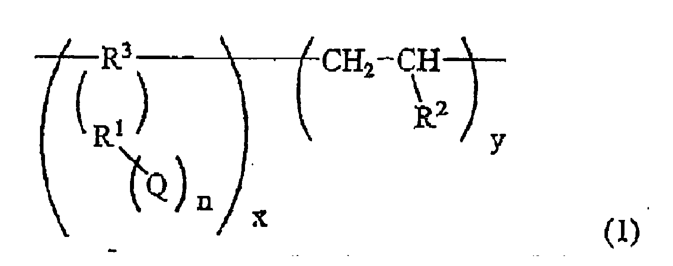 wobei x und y ein Copolymerisationsverhältnis darstellen und eine reelle Zahl sind, die 0/100 ≤ y/x ≤ 95/5 erfüllt; x und y auf molarer Basis angegeben sind;
n die Substitionszahl eines Substituenten Q ist und eine ganze Zahl von 0 ≤ n ≤ 2 ist;
R¹ eine 2+n valente Gruppe ausgewählt aus der Gruppe bestehend aus Kohlenwasserstoffgruppen mit 2 bis 20 Kohlenstoffatomen ist und R¹, das mehrmals vorhanden ist, gleich oder unterschiedlich sein kann;
R² ein Wasserstoffatom oder eine monovalente Gruppe ausgewählt aus der Gruppe bestehend aus Kohlenwasserstoffgruppen mit 1 bis 10 Kohlenstoffatomen enthaltend Kohlenstoff- und Wasserstoffatome ist und R², das mehrmals vorhanden ist, gleich oder unterschiedlich sein kann;
R³ eine tetravalente Gruppe ausgewählt aus der Gruppe bestehend aus Kohlenwasserstoffgruppen mit 2 bis 10 Kohlenstoffatomen ist und R³, das mehrmals vorhanden ist, gleich oder unterschiedlich sein kann;
Q COOR⁴ ist (R⁴ ist ein Wasserstoffatom, eine monovalente Gruppe ausgewählt aus der Gruppe bestehend aus Kohlenwasserstoffgruppen mit 1 bis 10 Kohlenstoffatomen enthaltend Kohlenstoff- und Wasserstoffatome).

2. Verwendung einer Harzzusammensetzung nach Anspruch 1, umfassend 0,01 bis 5 Massenanteile eines Ultraviolett-Absorbers und 0,01 bis 5 Massenanteile eines gehinderten Amin-basierten Lichtstabilisators, bezogen auf 100 Massenanteile des zyklischen Olefinpolymers.

3. Verwendung einer Harzzusammensetzung nach Anspruch 1 oder 2, wobei das zyklische Olefinpolymer eine Art oder zwei oder mehr Arten von Strukturen dargestellt durch die folgende allgemeine Formel (2) aufweist: 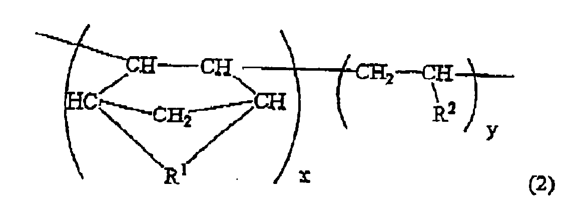 wobei R¹ eine 2+n valente Gruppe ausgewählt aus der Gruppe bestehend aus Kohlenwasserstoffgruppen mit 2 bis 20 Kohlenstoffatomen ist und R¹, das mehrmals vorhanden ist, gleich oder unterschiedlich sein kann;
R² ein Wasserstoffatom oder eine monovalente Gruppe ausgewählt aus der Gruppe bestehend aus Kohlenwasserstoffgruppen mit 1 bis 5 Kohlenstoffatomen ist und R², das mehrmals vorhanden ist, gleich oder unterschiedlich sein kann;
x und y das Copolymerisationsverhältnis darstellen und eine reelle Zahl sind, die 5/95 ≤ y/x ≤ 95/5 erfüllt; x und y auf molarer Basis angegeben sind.

4. Verwendung einer Harzzusammensetzung nach einem der Ansprüche 1 bis 3, wobei das zyklische Olefinpolymer ein Copolymer aus Tetrazyklo[4.4.0.1^{2,5}-1^{7,10}]-3-Dodecen und Ethylen ist.

5. Verwendung einer Harzzusammensetzung nach einem der Anspruch 1 bis 4, wobei das zyklisch Olefinpolymer eine Glasübergangstemperatur von 105°C bis 180°C aufweist.

6. Verwendung einer Harzzusammensetzung nach einem der Anspruch 1 bis 5, wobei die Harzzusammensetzung 0,01 bis 5 Massenanteile des Ultraviolett-Absorbers und 0,01 bis 5 Massenanteile des gehinderten Amin-basierten Lichtstabilisators bezogen auf 100 Massenanteile eines zyklischen Olefinpolymers mit der Glasübergangstemperatur von 105°C bis 180°C umfasst, wobei der UltraviolettAbsorber eine Benzotriazol-basierte Verbindung ist.

7. Verwendung einer Harzzusammensetzung nach einem der Ansprüche 1 bis 6, wobei wenn ein Formartikel mit einer Dicke von 3 mm unter Verwendung der Harzzusammensetzung hergestellt wird, der Formartikel bei einer Wellenlänge von 400 nm eine Lichtdurchlässigkeit von 70% oder mehr, und bei einer Wellenlänge von 800 nm von 80% oder mehr aufweist.

8. Verwendung nach einem der Ansprüche 1 bis 7, wobei die Harzzusammensetzung ein Material eines Pakets für eine Nass-Solarzelle ist.

9. Verwendung nach einem der Ansprüche 1 bis 7, wobei die Harzzusammensetzung ein Material eines transparenten Substrats für eine Nass-Solarzelle ist.

10. Nass-Solarzelle umfassend:
ein Paket mit einer Öffnung zum Aufbewahren einer elektrolytischen Lösung;
ein transparentes Substrat, das angeordnet ist mindestens einen Teil der Öffnung zu bedecken; und
ein Paar zugewandter Elektroden in einem Raum, der durch das Paket und das transparente Substrat gebildet ist; wobei:
a) das Paket ein Nass-Solarzellenpaket zum Aufbewahren einer elektrolytischen Lösung für die Nass-Solarzelle ist, erhältlich durch Formen einer wie in einem der Ansprüche 1 bis 7 definierten Harzzusammensetzung; oder
b) das transparente Substrat ein transparentes Substrat für eine Nass-Solarzelle ist, die auf einer lichtaufnehmenden Oberfläche der Nass-Solarzelle angeordnet ist, erhältlich durch Formen einer wie in einem der Ansprüche 1 bis 7 definierten Harzzusammensetzung.

## Revendications

1. Utilisation d'une composition de résine pour former
a) un réceptacle de cellule solaire électrochimique,
b) ou un substrat transparent pour cellule solaire électrochimique, laquelle composition de résine contient un polymère d'oléfine cyclique qui comporte des structures, d'un seul type ou de deux types ou plus, représentées par la formule générale (1) suivante : 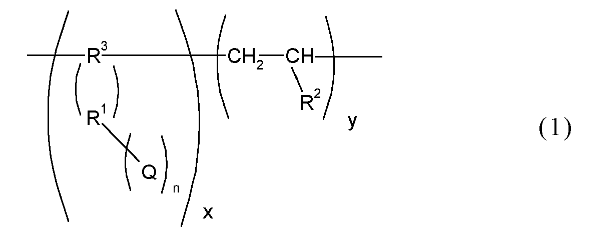 dans laquelle
- les indices x et y représentent un rapport de copolymérisation et sont des nombres réels tels que 0/100 ≤ y/x ≤ 95/5, ces nombres x et y étant des fractions molaires ;
- l'indice n est un nombre entier, tel que 0 ≤ n ≤ 2, qui représente le nombre de substituants représentés par Q ;
- R¹ représente un groupe de valence 2+n, choisi dans l'ensemble formé par les groupes hydrocarbonés comportant de 2 à 20 atomes de carbone, étant entendu que les groupes représentés par les symboles R¹, qui sont plusieurs, peuvent être identiques ou différents ;
- R² représente un atome d'hydrogène ou un groupe monovalent choisi dans l'ensemble formé par les groupes hydrocarbonés comportant de 1 à 10 atomes de carbone et contenant des atomes de carbone et d'hydrogène, étant entendu que les entités représentées par les symboles R² qui sont plusieurs, peuvent être identiques ou différentes ;
- R³ représente un groupe tétravalent, choisi dans l'ensemble formé par les groupes hydrocarbonés comportant de 2 à 10 atomes de carbone, étant entendu que les groupes représentés par les symboles R³, qui sont plusieurs, peuvent être identiques ou différents ;
- et Q représente un groupe de formule COOR⁴ où R⁴ représente un atome d'hydrogène ou un groupe monovalent choisi dans l'ensemble formé par les groupes hydrocarbonés comportant de 1 à 10 atomes de carbone et contenant des atomes de carbone et d'hydrogène.

2. Utilisation, conforme à la revendication 1, d'une composition de résine comprenant de 0,01 à 5 parties en masse d'un absorbeur de rayonnement ultraviolet et de 0,01 à 5 parties en masse d'un agent photostabilisant de type amine encombrée, pour 100 parties en masse du polymère d'oléfine cyclique.

3. Utilisation d'une composition de résine, conforme à la revendication 1 ou 2, pour laquelle le polymère d'oléfine cyclique comporte des structures, d'un seul type ou de deux types ou plus, représentées par la formule générale (2) suivante : 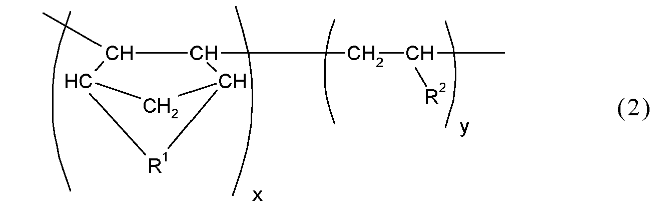 dans laquelle
- R¹ représente un groupe de valence 2+n, choisi dans l'ensemble formé par les groupes hydrocarbonés comportant de 2 à 20 atomes de carbone, étant entendu que les groupes représentés par les symboles R¹, qui sont plusieurs, peuvent être identiques ou différents ;
- R² représente un atome d'hydrogène ou un groupe monovalent choisi dans l'ensemble formé par les groupes hydrocarbonés comportant de 1 à 5 atomes de carbone, étant entendu que les entités représentées par les symboles R², qui sont plusieurs, peuvent être identiques ou différentes ;
- et les indices x et y représentent un rapport de copolymérisation et sont des nombres réels tels que 0/100 ≤ y/x ≤ 95/5, ces nombres x et y étant des fractions molaires.

4. Utilisation d'une composition de résine, conforme à l'une des revendications 1 à 3, pour laquelle le polymère d'oléfine cyclique est un copolymère de tétracyclo[4.4.0.1^{2,5}.1^{7,10}]dodéc-3-ène et d'éthylène.

5. Utilisation d'une composition de résine, conforme à l'une des revendications 1 à 4, pour laquelle le polymère d'oléfine cyclique présente une température de transition vitreuse de 105 à 180 °C.

6. Utilisation d'une composition de résine, conforme à l'une des revendications 1 à 5, pour laquelle la composition de résine comprend de 0,01 à 5 parties en masse d'un absorbeur de rayonnement ultraviolet et de 0,01 à 5 parties en masse d'un agent photostabilisant de type amine encombrée, pour 100 parties en masse d'un polymère d'oléfine cyclique présentant une température de transition vitreuse de 105 à 180 °C, et pour laquelle ledit absorbeur de rayonnement ultraviolet est un composé de type benzotriazole.

7. Utilisation d'une composition de résine, conforme à l'une des revendications 1 à 6, dans laquelle, quand on prépare un produit moulé épais de 3 mm en utilisant la composition de résine, ce produit moulé présente un taux de transmission de la lumière de 70 % ou plus pour la longueur d'onde de 400 nm et de 80 % ou plus pour la longueur d'onde de 800 nm.

8. Utilisation conforme à l'une des revendications 1 à 7, dans laquelle la composition de résine est un matériau de réceptacle de cellule solaire électrochimique.

9. Utilisation conforme à l'une des revendications 1 à 7, dans laquelle la composition de résine est un matériau de substrat transparent de cellule solaire électrochimique.

10. Cellule solaire électrochimique, comportant :
- un réceptacle présentant une ouverture et destiné à renfermer une solution électrolytique ;
- un substrat transparent disposé de manière à recouvrir au moins une partie de ladite ouverture ;
- et une paire d'électrodes se faisant face, placées dans un espace formé par ledit réceptacle et ledit substrat transparent ;
dans laquelle :
a) ledit réceptacle est un réceptacle de cellule solaire électrochimique, destiné à renfermer la solution électrolytique de la cellule solaire électrochimique, accessible par moulage d'une composition de résine telle que définie dans l'une des revendications 1 à 7 ;
b) ou ledit substrat transparent est un substrat transparent de cellule solaire électrochimique, disposé sur la surface photoréceptrice de la cellule solaire électrochimique, accessible par moulage d'une composition de résine telle que définie dans l'une des revendications 1 à 7.
